# EUROPEAN PATENT APPLICATION

(11) **EP 4 834 451 A1**
(43) Date of publication of application: **04.11.2026**
(21) Application number: 24912054.4
(22) Date of filing: 12.11.2024
(51) Int. Cl.: A63H 33/22, C08K 11/00, C08L 27/06, C09K 9/02

(54) **TEMPERATURE-SENSITIVE MULTICOLOR-CHANGING TOY**

(30) Priority: 28.12.2023 JP 2023222278
(71) Applicant: Kabushiki Kaisha Pilot Corporation (also trading as Pilot Corporation), Tokyo 104-8304 (JP); THE PILOT INK CO., LTD., Nagoya-shi, Aichi 466-8588 (JP)
(72) Inventor: MITA, Masayuki, Nagoya-shi, Aichi 466-8588 (JP)
(74) Representative: Elkington and Fife LLP
(86) International application number: PCT/JP2024/040062
(87) International publication number: WO 2025/142161

(57) **Abstract**

To provide a thermosensitive multi-color-changing toy that is rich in vividness of each color before and after color change and allows multicolor changes to be sharply and clearly visually recognized. A thermosensitive multi-color-changing toy contains a vinyl chloride resin in which a pigment A containing a reversible thermochromic composition a and a pigment B containing a reversible thermochromic composition b are dispersed, in which the toy has a hollow portion inside, and in said reversible thermochromic compositions a and b, a color development density of one reversible thermochromic composition is 40% or less at a complete color development temperature of the other reversible thermochromic composition, or a color development density of one reversible thermochromic composition is 60% or more at a complete decoloration temperature of the other reversible thermochromic composition.

## Description

### TECHNICAL FIELD

The present invention relates to a thermosensitive multi-color-changing toy. More specifically, the present invention relates to a thermosensitive multi-color-changing toy that exhibits a variety of color changes in response to temperature changes.

### BACKGROUND ART

Conventionally, a reversible thermosensitive multi-color-changing composition that develops multicolor in response to temperature changes, and a toy using the same, have been disclosed (for example, see Patent Literature 1).

A toy using said reversible thermosensitive multi-color-changing composition exhibits multicolor changes and has excellent vividness in each color before and after color change.

### CITATION LIST

### PATENT LITERATURE

Patent Literature 1: JP 2000-80359 A

### SUMMARY OF THE INVENTION

### OBJECT OF THE INVENTION

An object of the present invention is to provide a thermosensitive multi-color-changing toy that exhibits multicolor changes, has excellent vividness in each color before and after color change, and has excellent visibility of the multicolor changes.

### SOLUTION TO PROBLEM

The present invention is directed to a thermosensitive multi-color-changing toy containing a vinyl chloride resin in which a pigment A containing a reversible thermochromic composition a and a pigment B containing a reversible thermochromic composition b are dispersed, in which the toy has a hollow portion inside, each of said reversible thermochromic compositions a and b is a heating-decoloring composition that exhibits a hysteresis curve in a color density-temperature curve, in which, in a temperature-decreasing process from a decolored state, the compositions start to develop color when a color development starting temperature (T₂ or t₂) is reached and become completely colored when a complete color development temperature (T₁ or t₁) is reached, and in a temperature-increasing process from the colored state, the compositions start to decolor when a decoloration starting temperature (T₃ or t₃) is reached and become completely decolored when a complete decoloration temperature (T₄ or t₄) is reached, and a color development density of one reversible thermochromic composition is 40% or less at the complete color development temperature of the other reversible thermochromic composition, or a color development density of one reversible thermochromic composition is 60% or more at the complete decoloration temperature of the other reversible thermochromic composition.

Furthermore, the thermosensitive multi-color-changing toy according to the present invention also includes embodiments in which the toy has irregularities on a surface, the hysteresis curves of the reversible thermochromic compositions a and b do not overlap each other, the hysteresis curve of the reversible thermochromic composition b is included within the hysteresis curve of the reversible thermochromic composition a, a hysteresis width (ΔHₐ) of the reversible thermochromic composition a and a hysteresis width (ΔH_{b}) of the reversible thermochromic composition b satisfy the following conditions (1) and (2), or the hollow portion of said toy does not communicate with the outside, and a ratio of a volume of the vinyl chloride resin to a volume of the hollow portion is 85:15 to 10:90.${ΔH}_{a} = \left[\left({T}_{4}+{T}_{3}\right)/2-\left({T}_{2}+{T}_{1}\right)/2\right] = 10 to 50 ° C$ (1) ${ΔH}_{b} = \left[\left({t}_{4}+{t}_{3}\right)/2-\left({t}_{2}+{t}_{1}\right)/2\right] = 0.5 to 20 ° C$ (2)

(T₁, T₂, T₃, and T₄ represent the complete color development temperature, color development starting temperature, decoloration starting temperature, and complete decoloration temperature of the reversible thermochromic composition a, respectively, and t₁, t₂, t₃, and t₄ represent the complete color development temperature, color development starting temperature, decoloration starting temperature, and complete decoloration temperature of the reversible thermochromic composition b, respectively.)

Furthermore, a toy set according to the present invention includes a thermosensitive multi-color-changing toy and a temperature-changing member that changes a temperature of a part or all of said thermosensitive multi-color toy, and also includes, as another embodiment, one in which said temperature-changing member applies cold water or warm water to said thermosensitive multi-color-changing toy.

### ADVANTAGEOUS EFFECTS OF THE INVENTION

The present invention can provide a thermosensitive multi-color-changing toy and a toy set having high commercial value, the toy being formed of a vinyl chloride resin and having a hollow portion inside, being rich in vividness of each color before and after color change, and allowing multi color changes to be sensitively and clearly visually recognized.

### BRIEF DESCRIPTION OF DRAWINGS

[Fig. 1] Fig. 1 is a graph illustrating a color density-temperature curve of a reversible thermochromic composition.
[Fig. 2] Fig. 2 is a graph illustrating a color density-temperature curve of a thermosensitive multi-color-changing toy containing a reversible thermochromic composition a and a reversible thermochromic composition b of the present invention.
[Fig. 3] Fig. 3 is a graph illustrating a color density-temperature curve of a thermosensitive multi-color-changing toy containing another reversible thermochromic composition a and another reversible thermochromic composition b of the present invention.
[Fig. 4] Fig. 4 is a graph illustrating a color density-temperature curve of a thermosensitive multi-color-changing toy containing another reversible thermochromic composition a and another reversible thermochromic composition b of the present invention.

### BEST MODE FOR CARRYING OUT THE INVENTION

Said reversible thermochromic compositions a and b are thermochromic compositions containing three components: (α) an electron-donating color-developing organic compound, (β) an electron-accepting compound, and (γ) an organic compound medium that reversibly causes a color-developing reaction by an electron transfer reaction between said (α) and (β).

Specific examples include thermochromic compositions having a relatively small hysteresis width described in JP S51-35414 B, JP S51-44706 B, JP H1-17154 B, JP H7-186546 A, and the like, and highly sensitive thermochromic compositions that exhibit a hysteresis width of 3°C or less described in JP H1-29398 B.

This type of thermochromic composition changes color before and after a color change temperature as a boundary, and only one specific state of the two states before and after color change may exist in a normal temperature range. That is, the thermochromic composition is of a type in which the other state is maintained while heat or cold required for developing that state is being applied, but returns to the original state exhibited in the normal temperature range when the application of said heat or cold is stopped.

In addition, it is also possible to use thermosensitive color-changing color-memory compositions that change color while exhibiting large hysteresis characteristics, as described in JP H4-17154 B, JP H7-179777 A, JP H7-33997 A, JP H8-39936 A, and the like, that is, thermochromic compositions in which the shape of a curve obtained by plotting changes in color density due to temperature changes follows significantly different paths between a case where the temperature is increased from a temperature lower than a color change temperature range and a case where the temperature is decreased from a temperature higher than the color change temperature range, and which are capable of alternately memorizing and retaining the changed states.

The hysteresis characteristics in the color density-temperature curve of said reversible thermochromic composition will be described in detail.

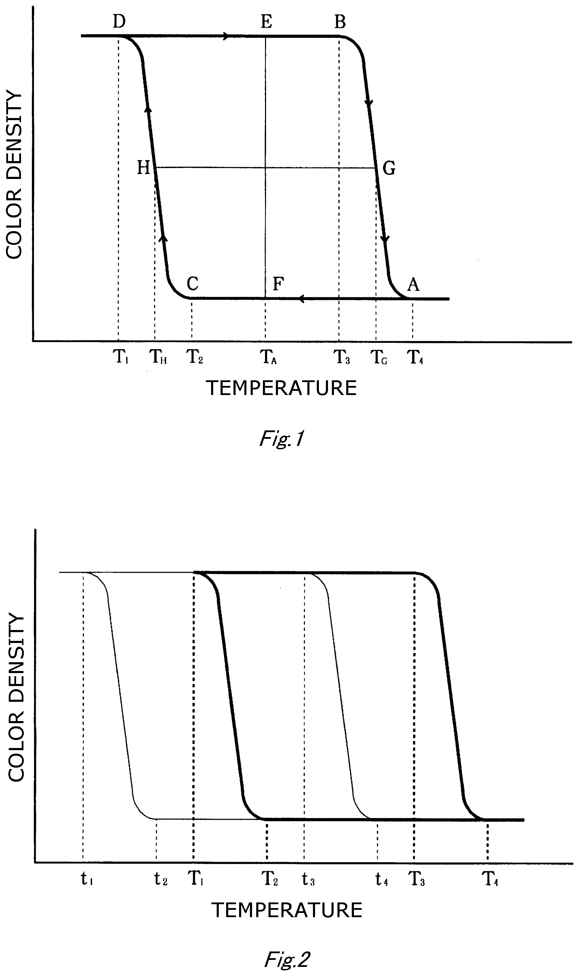

In Fig. 1, the vertical axis schematically represents color density, and the horizontal axis schematically represents temperature. The vertical axis is in arbitrary units, and a portion where the color density is high is a complete color development density (density: 100%), and a portion where the color density is low is a complete decoloration density (density: 0%). The change in color density due to a temperature change proceeds along the arrows. Here, A is a point indicating a density at the lowest temperature T₄ at which a completely decolored state is reached (hereinafter, referred to as a complete decoloration temperature), B is a point indicating a density at the highest temperature T₃ at which a completely colored state can be maintained (hereinafter, referred to as a decoloration starting temperature), C is a point indicating a density at the lowest temperature T₂ at which a completely decolored state can be maintained (hereinafter, referred to as a color development starting temperature), and D is a point indicating a density at the highest temperature T₁ at which a completely colored state is reached (hereinafter, referred to as a complete color development temperature).

At a temperature T_{A}, two phases coexist: a colored state at point E and a decolored state at point F, and a temperature range including the temperature T_{A}, in which the colored state and the decolored state can coexist, is a temperature range in which color change can be maintained, and a length of a line segment EF is a measure indicating a contrast of color change, and a length of a line segment HG passing through a midpoint of the line segment EF is a temperature width indicating a degree of hysteresis (hereinafter, referred to as a hysteresis width ΔH), and when the ΔH value is small, only one of the states before and after color change can exist in a normal temperature range. In addition, when said ΔH value is large (8 to 80°C), each state before and after color change is easily maintained.

It should be noted that the reversible thermochromic compositions a and b to be applied may have a configuration in which compositions of the same color tone are used to produce shades of color, but a configuration in which compositions of different colors are used to produce a variety of color changes is preferable because the commercial value can be further increased.

The components (α), (β), and (γ) contained in the reversible thermochromic composition will be specifically described below.

Said component (α), that is, the electron-donating color-developing organic compound, is a component that determines a color, and is a compound that donates electrons to the component (β), which is a developer, and develops color.

Examples of said electron-donating color-developing organic compound include phthalide compounds, fluoran compounds, styrylquinoline compounds, diazarhodamine lactone compounds, pyridine compounds, quinazoline compounds, and bisquinazoline compounds, and among these, phthalide compounds, fluoran compounds, styrylquinoline compounds, and diazarhodamine lactone compounds are preferable.

Examples of said phthalide compounds include diphenylmethane phthalide compounds, phenylindolyl phthalide compounds, indolyl phthalide compounds, diphenylmethane azaphthalide compounds, phenylindolyl azaphthalide compounds, and derivatives thereof, and among these, phenylindolyl azaphthalide compounds and derivatives thereof are preferable.

These compounds are exemplified below.

Examples thereof include 3,3-bis(p-dimethylaminophenyl)-6-dimethylaminophthalide,
3-(4-diethylaminophenyl)-3-(1-ethyl-2-methylindol-3-yl)phthalide,
3,3-bis(1-n-butyl-2-methylindol-3-yl)phthalide,
3,3-bis(2-ethoxy-4-diethylaminophenyl)-4-azaphthalide,
3-(2-ethoxy-4-diethylaminophenyl)-3-(1-ethyl-2-methylindol-3-yl)-4-azaphthalide,
3-(2-hexyloxy-4-diethylaminophenyl)-3-(1-ethyl-2-methylindol-3-yl)-4-azaphthalide,
3-[2-ethoxy-4-(N-ethylanilino)phenyl]-3-(1-ethyl-2-methylindol-3-yl)-4-azaphthalide,
3-(2-acetamido-4-diethylaminophenyl)-3-(1-propylindol-3-yl)-4-azaphthalide,
3,6-bis(diphenylamino)fluoran,
3,6-dimethoxyfluoran,
3,6-di-n-butoxyfluoran,
2-methyl-6-(N-ethyl-N-p-tolylamino)fluoran,
3-chloro-6-cyclohexylaminofluoran,
2-methyl-6-cyclohexylaminofluoran,
2-(2-chloroamino)-6-dibutylaminofluoran,
2-(2-chloroanilino)-6-di-n-butylaminofluoran,
2-(3-trifluoromethylanilino)-6-diethylaminofluoran,
2-(3-trifluoromethylanilino)-6-dipentylaminofluoran,
2-(dibenzylamino)-6-diethylaminofluoran,
2-(N-methylanilino)-6-(N-ethyl-N-p-tolylamino)fluoran,
1,3-dimethyl-6-diethylaminofluoran,
2-chloro-3-methyl-6-diethylaminofluoran,
2-anilino-3-methyl-6-diethylaminofluoran,
2-anilino-3-methoxy-6-diethylaminofluoran,
2-anilino-3-methyl-6-di-n-butylaminofluoran,
2-anilino-3-methoxy-6-di-n-butylaminofluoran,
2-xylidino-3-methyl-6-diethylaminofluoran,
2-anilino-3-methyl-6-(N-ethyl-N-p-tolylamino)fluoran,
1,2-benz-6-diethylaminofluoran,
1,2-benz-6-(N-ethyl-N-isobutylamino)fluoran,
1,2-benz-6-(N-ethyl-N-isoamylamino)fluoran,
2-(3-methoxy-4-dodecoxystyryl)quinoline,
spiro[5H-(1)benzopyrano(2,3-d)pyrimidine-5,1'(3'H)-isobenzofuran]-3'-one, 2-(diethylamino)-8-(diethylamino)-4-methyl,
spiro[5H-(1)benzopyrano(2,3-d)pyrimidine-5,1'(3'H)-isobenzofuran]-3'-one, 2-(di-n-butylamino)-8-(di-n-butylamino)-4-methyl,
spiro[5H-(1)benzopyrano(2,3-d)pyrimidine-5,1'(3'H)-isobenzofuran]-3'-one, 2-(di-n-butylamino)-8-(diethylamino)-4-methyl,
spiro[5H-(1)benzopyrano(2,3-d)pyrimidine-5,1'(3'H)-isobenzofuran]-3'-one, 2-(di-n-butylamino)-8-(N-ethyl-N-i-amylamino)-4-methyl,
spiro[5H-(1)benzopyrano(2,3-d)pyrimidine-5,1'(3'H)-isobenzofuran]-3'-one, 2-(dibutylamino)-8-(dipentylamino)-4-methyl,
4,5,6,7-tetrachloro-3-[4-(dimethylamino)-2-methoxyphenyl]-3-(1-butyl-2-methyl-1H-indol-3-yl)-1(3H)-isobenzofuranone,
4,5,6,7-tetrachloro-3-[4-(diethylamino)-2-ethoxyphenyl]-3-(1-ethyl-2-methyl-1H-indol-3-yl)-1(3H)-isobenzofuranone,
4,5,6,7-tetrachloro-3-[4-(diethylamino)-2-ethoxyphenyl]-3-(1-pentyl-2-methyl-1H-indol-3-yl)-1(3H)-isobenzofuranone,
4,5,6,7-tetrachloro-3-[4-(diethylamino)-2-methylphenyl]-3-(1-ethyl-2-methyl-1H-indol-3-yl)-1(3H)-isobenzofuranone,
3',6'-bis[phenyl(2-methylphenyl)amino]-spiro[isobenzofuran-1(3H),9'-[9H]xanthen]-3-one,
3',6'-bis[phenyl(3-methylphenyl)amino]-spiro[isobenzofuran-1(3H),9'-[9H]xanthen]-3-one,
3',6'-bis[phenyl(3-ethylphenyl)amino]-spiro[isobenzofuran-1(3H),9'-[9H]xanthen]-3-one,
2,6-bis(2'-ethyloxyphenyl)-4-(4'-dimethylaminophenyl)pyridine,
2,6-bis(2',4'-diethyloxyphenyl)-4-(4'-dimethylaminophenyl)pyridine,
2-(4'-dimethylaminophenyl)-4-methoxyquinazoline, and
4,4'-(ethylenedioxy)-bis[2-(4-diethylaminophenyl)quinazoline].

It should be noted that the fluorans may be, in addition to said compounds having a substituent on the phenyl group forming the xanthene ring, compounds that have a substituent on the phenyl group forming the xanthene ring and also have a substituent (for example, an alkyl group such as a methyl group, or a halogen atom such as a chloro group) on the phenyl group forming the lactone ring, and exhibit a blue color or black color.

Said component (β), that is, the electron-accepting compound, is a compound that receives electrons from the component (α) and functions as a developer for the component (α).

Examples of said electron-accepting compound include compounds selected from a group of compounds having an active proton and derivatives thereof, a group of pseudo-acidic compounds (a group of compounds that are not acids but act as acids in the composition to cause the component (α) to develop color), and a group of compounds having an electron hole, and among these, compounds selected from a group of compounds having an active proton are preferable.

Examples of the compound having an active proton and derivatives thereof include compounds having a phenolic hydroxy group and metal salts thereof, carboxylic acids and metal salts thereof, preferably aromatic carboxylic acids, aliphatic carboxylic acids having 2 to 5 carbon atoms and metal salts thereof, acidic phosphoric acid esters and metal salts thereof, azole-based compounds and derivatives thereof, and 1,2,3-triazole and derivatives thereof, and among these, compounds having a phenolic hydroxy group are preferable because effective thermochromic properties can be exhibited.

Said compound having a phenolic hydroxy group broadly includes compounds ranging from monophenol compounds to polyphenol compounds, and further includes bis-type and tris-type phenols, as well as phenol-aldehyde condensation resins. Among the compounds having a phenolic hydroxy group, compounds having at least two benzene rings are preferable. In addition, these compounds may have a substituent, and examples of the substituent include an alkyl group, an aryl group, an acyl group, an alkoxycarbonyl group, a carboxyl group and an ester or amide group thereof, and a halogen group.

Examples of a metal contained in a metal salt of said compound having an active proton include sodium, potassium, calcium, zinc, zirconium, aluminum, magnesium, nickel, cobalt, tin, copper, iron, vanadium, titanium, lead, and molybdenum.

Specific examples are given below.

Examples thereof include phenol, o-cresol, tert-butylcatechol, nonylphenol, n-octylphenol, n-dodecylphenol, n-stearylphenol, p-chlorophenol, p-bromophenol, o-phenylphenol, n-butyl p-hydroxybenzoate, n-octyl p-hydroxybenzoate, resorcinol, dodecyl gallate, 4,4-dihydroxydiphenyl sulfone, bis(4-hydroxyphenyl) sulfide, 1,1-bis(4-hydroxyphenyl)ethane, 1,1-bis(4-hydroxyphenyl)propane, 1,1-bis(4-hydroxyphenyl)n-butane, 1,1-bis(4-hydroxyphenyl)n-pentane, 1,1-bis(4-hydroxyphenyl)n-hexane, 1,1-bis(4-hydroxyphenyl)n-heptane, 1,1-bis(4-hydroxyphenyl)n-octane, 1,1-bis(4-hydroxyphenyl)n-nonane, 1,1-bis(4-hydroxyphenyl)n-decane, 1,1-bis(4-hydroxyphenyl)n-dodecane, 1,1-bis(4-hydroxyphenyl)-2-methylpropane, 1,1-bis(4-hydroxyphenyl)-3-methylbutane, 1,1-bis(4-hydroxyphenyl)-3-methylpentane, 1,1-bis(4-hydroxyphenyl)-2,3-dimethylpentane, 1,1-bis(4-hydroxyphenyl)-2-ethylbutane, 1,1-bis(4-hydroxyphenyl)-2-ethylhexane, 1,1-bis(4-hydroxyphenyl)-3,7-dimethyloctane, 1,1-bis(4-hydroxyphenyl)cyclohexane, 1,1-bis(4-hydroxyphenyl)-3,3,5-trimethylcyclohexane, 1-phenyl-1,1-bis(4-hydroxyphenyl)ethane, 2,2-bis(4-hydroxyphenyl)propane, 2,2-bis(4-hydroxyphenyl)n-butane, 2,2-bis(4-hydroxyphenyl)n-pentane, 2,2-bis(4-hydroxyphenyl)n-hexane, 2,2-bis(4-hydroxyphenyl)n-heptane, 2,2-bis(4-hydroxyphenyl)n-octane, 2,2-bis(4-hydroxyphenyl)n-nonane, 2,2-bis(4-hydroxyphenyl)n-decane, 2,2-bis(4-hydroxyphenyl)n-dodecane, 2,2-bis(4-hydroxyphenyl)ethyl propionate, 2,2-bis(4-hydroxyphenyl)-4-methylpentane, 2,2-bis(4-hydroxyphenyl)-4-methylhexane, 2,2-bis(4-hydroxyphenyl)hexafluoropropane, 2,2-bis(4-hydroxy-3-methylphenyl)propane, 9,9-bis(4-hydroxy-3-methylphenyl)fluorene, 1,1-bis[2-(4-hydroxyphenyl)-2-propyl]benzene, bis(2-hydroxyphenyl)methane, 1,1,1-tris(4-hydroxyphenyl)ethane, and 3,3-bis(3-methyl-4-hydroxyphenyl)butane.

Although said compound having a phenolic hydroxy group can exhibit the most effective thermochromic properties, compounds selected from aromatic carboxylic acids, aliphatic carboxylic acids having 2 to 5 carbon atoms, metal salts of carboxylic acids, acidic phosphoric acid esters and metal salts thereof, and 1,2,3-triazole and derivatives thereof may also be used.

The component (γ), which is a reaction medium that reversibly causes an electron transfer reaction between said components (α) and (β) in a specific temperature range, will be described.

Examples of said component (γ) include alcohols, esters, ketones, ethers, and acid amides.

When said component (γ) is used for microencapsulation and secondary processing described below, a low-molecular-weight compound is likely to evaporate out of the capsule when subjected to high-temperature treatment, and therefore, a compound having 10 or more carbon atoms is preferably used so that the component (γ) is stably retained in the capsule.

As the alcohols, aliphatic monohydric saturated alcohols having 10 or more carbon atoms are effective, and specific examples thereof include decyl alcohol, undecyl alcohol, dodecyl alcohol, tridecyl alcohol, tetradecyl alcohol, pentadecyl alcohol, hexadecyl alcohol, heptadecyl alcohol, octadecyl alcohol, eicosyl alcohol, and docosyl alcohol.

As the esters, esters having 10 or more carbon atoms are effective, and examples thereof include esters obtained from any combination of a monovalent carboxylic acid having an aliphatic group, an alicyclic ring, or an aromatic ring and a monohydric alcohol having an aliphatic group, an alicyclic ring, or an aromatic ring; esters obtained from any combination of a polyvalent carboxylic acid having an aliphatic group, an alicyclic ring, or an aromatic ring and a monohydric alcohol having an aliphatic group, an alicyclic ring, or an aromatic ring; and esters obtained from any combination of a monovalent carboxylic acid having an aliphatic group, an alicyclic ring, or an aromatic ring and a polyhydric alcohol having an aliphatic group, an alicyclic ring, or an aromatic ring, and specific examples include ethyl caprylate, octyl caprylate, stearyl caprylate, myristyl caprate, docosyl caprate, 2-ethylhexyl laurate, n-decyl laurate, 3-methylbutyl myristate, myristyl myristate, cetyl myristate, isopropyl palmitate, neopentyl palmitate, nonyl palmitate, cyclohexyl palmitate, n-butyl stearate, 2-methylbutyl stearate, 3,5,5-trimethylhexyl stearate, n-undecyl stearate, pentadecyl stearate, stearyl stearate, cyclohexylmethyl stearate, isopropyl behenate, hexyl behenate, lauryl behenate, behenyl behenate, cetyl benzoate, stearyl p-tert-butylbenzoate, dimyristyl phthalate, distearyl phthalate, dimyristyl oxalate, dicetyl oxalate, dicetyl malonate, dilauryl succinate, dilauryl glutarate, diundecyl adipate, dilauryl azelate, di(n-nonyl) sebacate, dineopentyl 1,18-octadecylmethylenedicarboxylate, ethylene glycol dimyristate, propylene glycol dilaurate, propylene glycol distearate, hexylene glycol dipalmitate, 1,5-pentanediol distearate, 1,2,6-hexanetriol trimyristate, 1,4-cyclohexanediol didecyl, 1,4-cyclohexanedimethanol dimyristate, xylene glycol dicaprinate, and xylene glycol distearate.

In addition, ester compounds selected from esters of saturated fatty acids and branched aliphatic alcohols, esters of unsaturated fatty acids or branched or substituted saturated fatty acids and branched aliphatic alcohols or aliphatic alcohols having 16 or more carbon atoms, cetyl butyrate, stearyl butyrate, and behenyl butyrate are also effective.

Specific examples thereof include 2-ethylhexyl butyrate, 2-ethylhexyl behenate, 2-ethylhexyl myristate, 2-ethylhexyl caprate, 3,5,5-trimethylhexyl laurate, 3,5,5-trimethylhexyl palmitate, 3,5,5-trimethylhexyl stearate, 2-methylbutyl caproate, 2-methylbutyl caprylate, 2-methylbutyl caprate, 1-ethylpropyl palmitate, 1-ethylpropyl stearate, 1-ethylpropyl behenate, 1-ethylhexyl laurate, 1-ethylhexyl myristate, 1-ethylhexyl palmitate, 2-methylpentyl caproate, 2-methylpentyl caprylate, 2-methylpentyl caprate, 2-methylpentyl laurate, 2-methylbutyl stearate, 2-methylbutyl stearate, 3-methylbutyl stearate, 1-methylheptyl stearate, 2-methylbutyl behenate, 3-methylbutyl behenate, 1-methylheptyl stearate, 1-methylheptyl behenate, 1-ethylpentyl caproate, 1-ethylpentyl palmitate, 1-methylpropyl stearate, 1-methyloctyl stearate, 1-methylhexyl stearate, 1,1-dimethylpropyl laurate, 1-methylpentyl caprate, 2-methylhexyl palmitate, 2-methylhexyl stearate, 2-methylhexyl behenate, 3,7-dimethyloctyl laurate, 3,7-dimethyloctyl myristate, 3,7-dimethyloctyl palmitate, 3,7-dimethyloctyl stearate, 3,7-dimethyloctyl behenate, stearyl oleate, behenyl oleate, stearyl linoleate, behenyl linoleate, 3,7-dimethyloctyl erucate, stearyl erucate, isostearyl erucate, cetyl isostearate, stearyl isostearate, 2-methylpentyl 12-hydroxystearate, 2-ethylhexyl 18-bromostearate, isostearyl 2-ketomyristate, 2-ethylhexyl 2-fluoromyristate, cetyl butyrate, stearyl butyrate, and behenyl butyrate.

Furthermore, in order to change color while exhibiting large hysteresis characteristics with respect to a color density-temperature curve and to impart color-memory properties depending on temperature changes, examples include carboxylic acid ester compounds exhibiting a ΔT value (melting point-cloud point) of 5°C or more and less than 50°C described in JP H4-17154 B, such as carboxylic acid esters containing a substituted aromatic ring in the molecule, esters of a carboxylic acid containing an unsubstituted aromatic ring and an aliphatic alcohol having 10 or more carbon atoms, carboxylic acid esters containing a cyclohexyl group in the molecule, esters of a fatty acid having 6 or more carbon atoms and an unsubstituted aromatic alcohol or phenol, esters of a fatty acid having 8 or more carbon atoms and a branched aliphatic alcohol, esters of a dicarboxylic acid and an aromatic alcohol or branched aliphatic alcohol, dibenzyl cinnamate, heptyl stearate, didecyl adipate, dilauryl adipate, dimyristyl adipate, dicetyl adipate, distearyl adipate, trilaurin, trimyristin, tristearin, dimyristin, and distearin.

Fatty acid ester compounds obtained from an odd-numbered aliphatic monohydric alcohol having 9 or more carbon atoms and an even-numbered aliphatic carboxylic acid, and fatty acid ester compounds having a total of 17 to 23 carbon atoms obtained from n-pentyl alcohol or n-heptyl alcohol and an even-numbered aliphatic carboxylic acid having 10 to 16 carbon atoms are also effective.

Specific examples thereof include n-pentadecyl acetate, n-tridecyl butyrate, n-pentadecyl butyrate, n-undecyl caproate, n-tridecyl caproate, n-pentadecyl caproate, n-nonyl caprylate, n-undecyl caprylate, n-tridecyl caprylate, n-pentadecyl caprylate, n-heptyl caprate, n-nonyl caprate, n-undecyl caprate, n-tridecyl caprate, n-pentadecyl caprate, n-pentyl laurate, n-heptyl laurate, n-nonyl laurate, n-undecyl laurate, n-tridecyl laurate, n-pentadecyl laurate, n-pentyl myristate, n-heptyl myristate, n-nonyl myristate, n-undecyl myristate, n-tridecyl myristate, n-pentadecyl myristate, n-pentyl palmitate, n-heptyl palmitate, n-nonyl palmitate, n-undecyl palmitate, n-tridecyl palmitate, n-pentadecyl palmitate, n-nonyl stearate, n-undecyl stearate, n-tridecyl stearate, n-pentadecyl stearate, n-nonyl eicosanoate, n-undecyl eicosanoate, n-tridecyl eicosanoate, n-pentadecyl eicosanoate, n-nonyl behenate, n-undecyl behenate, n-tridecyl behenate, and n-pentadecyl behenate.

As the ketones, aliphatic ketones having a total of 10 or more carbon atoms are effective, and specific examples thereof include 2-decanone, 3-decanone, 4-decanone, 2-undecanone, 3-undecanone, 4-undecanone, 5-undecanone, 2-dodecanone, 3-dodecanone, 4-dodecanone, 5-dodecanone, 2-tridecanone, 3-tridecanone, 2-tetradecanone, 2-pentadecanone, 8-pentadecanone, 2-hexadecanone, 3-hexadecanone, 9-heptadecanone, 2-pentadecanone, 2-octadecanone, 2-nonadecanone, 10-nonadecanone, 2-eicosanone, 11-eicosanone, 2-heneicosanone, 2-docosanone, laurone, and stearone.

Further, arylalkyl ketones having a total of 12 to 24 carbon atoms are also effective, and specific examples thereof include n-octadecanophenone, n-heptadecanophenone, n-hexadecanophenone, n-pentadecanophenone, n-tetradecanophenone, 4-n-dodecylacetophenone, n-tridecanophenone, 4-n-undecylacetophenone, n-laurophenone, 4-n-decylacetophenone, n-undecanophenone, 4-n-nonylacetophenone, n-decanophenone, 4-n-octylacetophenone, n-nonanophenone, 4-n-heptylacetophenone, n-octanophenone, 4-n-hexylacetophenone, 4-n-cyclohexylacetophenone, 4-tert-butylpropiophenone, n-heptaphenone, 4-n-pentylacetophenone, cyclohexyl phenyl ketone, benzyl n-butyl ketone, 4-n-butylacetophenone, n-hexanophenone, 4-isobutylacetophenone, 1-acetonaphthone, 2-acetonaphthone, and cyclopentyl phenyl ketone.

As the ethers, aliphatic ethers having a total of 10 or more carbon atoms are effective, and specific examples thereof include dipentyl ether, dihexyl ether, diheptyl ether, dioctyl ether, dinonyl ether, didecyl ether, diundecyl ether, didodecyl ether, ditridecyl ether, ditetradecyl ether, dipentadecyl ether, dihexadecyl ether, dioctadecyl ether, decanediol dimethyl ether, undecanediol dimethyl ether, dodecanediol dimethyl ether, tridecanediol dimethyl ether, decanediol diethyl ether, and undecanediol diethyl ether.

Examples of the acid amides include acetamide, propionamide, butyramide, caproamide, caprylamide, capramide, lauramide, myristamide, palmitamide, stearamide, behenamide, oleamide, erucamide, benzamide, caproanilide, caprylanilide, capranilide, lauranilide, myristanilide, palmitanilide, stearanilide, behenanilide, oleoanilide, erucanilide, N-methylcaproamide, N-methylcaprylamide, N-methylcapramide, N-methyllauramide, N-methylmyristamide, N-methylpalmitamide, N-methylstearamide, N-methylbehenamide, N-methyloleamide, N-methylerucamide, N-ethyllauramide, N-ethylmyristamide, N-ethylpalmitamide, N-ethylstearamide, N-ethyloleamide, N-butyllauramide, N-butylmyristamide, N-butylpalmitamide, N-butylstearamide, N-butyloleamide, N-octyllauramide, N-octylmyristamide, N-octylpalmitamide, N-octylstearamide, N-octyloleamide, N-dodecyllauramide, N-dodecylmyristamide, N-dodecylpalmitamide, N-dodecylstearamide, N-dodecyloleamide, dilauramide, dimyristamide, dipalmitamide, distearamide, dioleamide, trilauramide, trimyristamide, tripalmitamide, tristearamide, trioleamide, succinamide, adipamide, glutaramide, malonamide, azelamide, maleamide, N-methylsuccinamide, N-methyladipamide, N-methylglutaramide, N-methylmalonamide, N-methylazelamide, N-ethylsuccinamide, N-ethyladipamide, N-ethylglutaramide, N-ethylmalonamide, N-ethylazelamide, N-butylsuccinamide, N-butyladipamide, N-butylglutaramide, N-butylmalonamide, N-octyladipamide, and N-dodecyladipamide.

Said reversible thermochromic composition is dispersed in a thermoplastic resin or a thermosetting resin and used as a thermochromic pigment, or is encapsulated in microcapsules and used as a thermochromic microcapsule pigment.

It should be noted that said microcapsule pigment is obtained by applying a known microencapsulation technique, such as an interfacial polymerization method, an in situ polymerization method, an in-liquid curing coating method, a phase separation method from an aqueous solution, a phase separation method from an organic solvent, a melt dispersion cooling method, an in-air suspension coating method, or a spray drying method.

By dispersing the reversible thermochromic composition described above in a resin for use, or by encapsulating the reversible thermochromic composition in microcapsules for use, the reversible thermochromic material is maintained in the same composition under various use conditions and can exhibit the same effects, and a chemically and physically stable pigment can be formed.

An average particle diameter of said pigment is 0.5 to 30 µm, preferably 1 to 20 µm, and more preferably 1 to 10 µm, which is effective because excellent sharpness of color change is achieved.

Said reversible thermochromic composition is a heating-decoloring composition that exhibits the hysteresis curve described above, and at least two types of compositions having different color change temperatures are used in combination in the ink composition.

Accordingly, when a color development density of one reversible thermochromic composition is 40% or less at the complete color development temperature of the other reversible thermochromic composition, or when a color development density of one reversible thermochromic composition is 60% or more at the complete decoloration temperature of the other reversible thermochromic composition, visibility for visually distinguishing the color-changed states of the thermochromic compositions is appropriately maintained, and the color change can be perceived. When said color development density is not satisfied, color development or decoloration of the thermochromic compositions a and b becomes continuous, making it difficult to recognize the color change.

Here, the phrase "the color development density of the other reversible thermochromic composition is 40% or less or 60% or more" refers to a color density when the color development density at the complete color development temperature of the other reversible thermochromic composition is taken as 100%.

This will be described more specifically with reference to the color density-temperature curve of Fig. 2. Here, for convenience, the reversible thermochromic composition having a hysteresis curve in a relatively high temperature range is referred to as the reversible thermochromic composition a, and the reversible thermochromic composition having a hysteresis curve in a relatively low temperature range is referred to as the reversible thermochromic composition b. T₁, T₂, T₃, and T₄ are defined as the complete color development temperature, color development starting temperature, decoloration starting temperature, and complete decoloration temperature of the reversible thermochromic composition a, and t₁, t₂, t₃, and t₄ are defined as the complete color development temperature, color development starting temperature, decoloration starting temperature, and complete decoloration temperature of the reversible thermochromic composition b. In the embodiment illustrated in Fig. 2, T₁>t₁ and T₄>t₄ are satisfied, and t₃>T₁ and t₄>T₂ are satisfied. In a system in which the color development density of the reversible thermochromic composition b is 40% or less at the complete color development temperature (T₁) of the reversible thermochromic composition a, both the reversible thermochromic compositions a and b are colorless in a temperature range of T₄ or higher, and when the temperature reaches T₂ by temperature decrease, the reversible thermochromic composition a starts to develop color, and when the temperature reaches T₁, the reversible thermochromic composition a becomes completely colored. At this point, a color change from colorless to colored (1) is visually recognized.

Since the color development density of the reversible thermochromic composition b is 40% or less at this point, the color during color development of the reversible thermochromic composition b is difficult to visually recognize, and when the temperature is further decreased and reaches t₁, the reversible thermochromic composition b becomes completely colored, such that the color tone of colored (2), which is mixed with colored (1), is visually recognized.

Next, in a system in which the color development density of the reversible thermochromic composition a is 60% or more at the complete decoloration temperature (t₄) of the reversible thermochromic composition b, the reversible thermochromic compositions a and b exhibit colored (2) in a temperature range of t₁ or lower, and when the temperature is increased from this state, the reversible thermochromic composition b starts to decolor when the temperature reaches t₃, and completely decolors to become colored (1) when the temperature reaches t₄. Since the color development density of the reversible thermochromic composition a is 60% or more at this point, the color during color development of the reversible thermochromic composition a is easily visually recognized, and when the temperature is further increased and reaches T₄, the reversible thermochromic compositions a and b are completely decolored, such that a color change from colored (1) to colorless is visually recognized.

Accordingly, by using said reversible thermochromic compositions a and b exhibiting the hysteresis characteristics shown in Fig. 2, clear and highly visible color changes among three states of colorless, colored (1), and colored (2) are visually recognized.

It should be noted that by adding a non-color-changing colorant to the vinyl chloride resin, any of the reversible thermochromic compositions, or any of the reversible thermochromic pigments, color changes among colored (1), colored (2), and colored (3) are visually recognized.

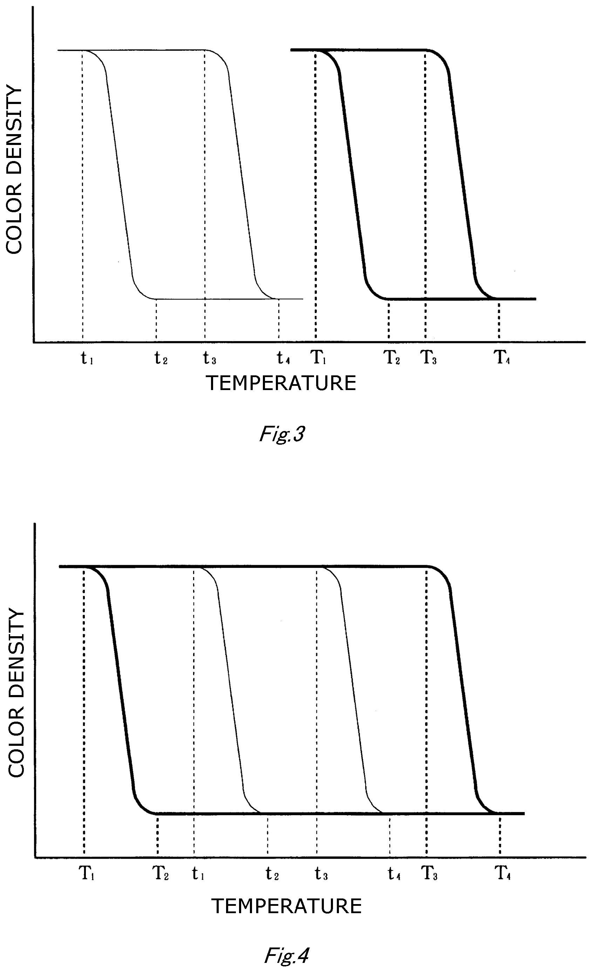

In addition, even when the hysteresis curves of the reversible thermochromic compositions a and b do not overlap each other as shown in Fig. 3, multicolor changes are visually recognized. In the embodiment illustrated in Fig. 3, T₁>t₁ and T₄>t₄ are satisfied, and T₁>t₄ is satisfied, and in the temperature-decreasing process described above, three-state color changes from colorless to colored (1) and then from colored (1) to colored (2), and color changes of colored (1), colored (2), and colored (3) to which a non-color-changing colorant is added can be visually recognized, and in the temperature-increasing process, three-state color changes from colored (2) to colored (1) and then from colored (1) to colorless, and color changes of colored (3), colored (2), and colored (1) to which a non-color-changing colorant is added can be visually recognized.

Here, when the complete decoloration temperature (T₄) of the reversible thermochromic composition a is in a temperature range of 25°C or more and 37°C or less, and the complete color development temperature (T₁) is in a temperature range of 20°C or more and less than 25°C, color change can be caused by body temperature through touch or the like, and therefore color change can be visually recognized more easily.

In addition, when the complete decoloration temperature (T₄) of the reversible thermochromic composition a is in a temperature range of 26°C or more and 37°C or less, the complete color development temperature (T₁) is in a temperature range of 25°C or more and less than 26°C, and the complete decoloration temperature (t₄) of the reversible thermochromic composition b is 24°C or less, various color changes can be visually recognized by color change caused by body temperature through touch or the like and combined use of cooling means, and practical utility is excellent.

In addition, as shown in Fig. 4, the hysteresis curve of the reversible thermochromic composition b may be included inside the hysteresis curve of the reversible thermochromic composition a. Here, for convenience, the reversible thermochromic composition having a hysteresis curve in a relatively wide temperature range is referred to as the reversible thermochromic composition a, and the reversible thermochromic composition having a hysteresis curve in a relatively narrow temperature range is referred to as the reversible thermochromic composition b. In this case, specifically, t₁ is higher than T₁, and t₄ is lower than T₄.

In this case, the composition is colorless in a temperature range of T₄ or higher, and when the temperature reaches t₂ by temperature decrease, the reversible thermochromic composition b starts to develop color, and when the temperature reaches t₁, the reversible thermochromic composition b becomes completely colored. At this point, a color change from colorless to colored (1) is visually recognized.

When the temperature is further decreased, the reversible thermochromic composition a starts to develop color when the temperature reaches T₂ and becomes completely colored when the temperature reaches T₁, such that the color tone of colored (2), which is mixed with colored (1), is visually recognized.

When the temperature is increased from this state, the reversible thermochromic composition b starts to decolor when the temperature reaches t₃ and becomes completely decolored when the temperature reaches t₄, such that a color change from colored (2) to colored (3) is visually recognized.

When the temperature is further increased, the reversible thermochromic composition a starts to decolor when the temperature reaches T₃ and becomes completely decolored when the temperature reaches T₄, such that a color change from colored (3) to colorless is visually recognized.

Accordingly, by using said reversible thermochromic compositions a and b exhibiting the hysteresis characteristics shown in Fig. 4, four-state color changes of colorless, colored (1), colored (2), and colored (3) can be visually recognized, and, as necessary, by adding a non-color-changing colorant to the vinyl chloride resin, any of the reversible thermochromic compositions, or any of the reversible thermochromic pigments, color changes of colored (1), colored (2), colored (3), and colored (4) are visually recognized.

In addition, when t₁ of the reversible thermochromic composition b included inside is 25°C or more, ΔH_{b} is 0.5 to 5°C, and t₄ is 36°C to 37°C or less, the color exhibited by the composition b is decolored by body temperature (36°C to 37°C) through finger touch or the like, and exhibits a colored state in a room temperature range lower than that, and therefore, from said first color, a second color appears by body temperature through finger touch or the like, a third color appears by warming through friction, hot water, or the like, a fourth color appears by a temperature decrease to a room temperature range, and the color-changed state can be returned again to the first color by room temperature, tap water, ice water, or the like.

As described above, a variety of color changes can be easily produced and visually perceived by heat or cold means in a living environment temperature range, and a special color-changing device or the like is not required.

In addition, in a system in which the hysteresis curve of the reversible thermochromic composition b is included within the hysteresis curve of the reversible thermochromic composition a as shown in Fig. 4, by using a thermochromic composition a that exhibits color change with a large hysteresis width (ΔHₐ), and a thermochromic composition b that has a hysteresis width (ΔH_{b}) smaller than ΔHₐ of the thermochromic composition a and changes color within the color change temperature range of said thermochromic composition a, and by satisfying said specific temperature characteristics between said thermochromic compositions a and b, high-sensitivity color change in a specific temperature range, color-memory properties, multicolor-changing properties, unexpectedness of color change, and interestingness of color change can be effectively exhibited.

Explaining this point, by specifying the ΔHₐ value of the thermochromic composition a to be in a range of 10 to 50°C, and preferably 15 to 35°C, color development or decoloration can be caused by a living environment temperature or simple heating or cooling means, and the appearance due to color change in said color-developed state or decolored state can be alternately memorized and retained in a normal temperature range. When the ΔHₐ value is less than 10°C, the color-memory function is insufficient, and when the ΔHₐ value exceeds 50°C, the color-memory function is achieved, but an interconvertible color-memory function is difficult to exhibit by a living environment temperature or simple heating or cooling means.

On the other hand, the ΔH_{b} value of the thermochromic pigment b satisfies a range of 0.5 to 20°C, and preferably 0.5 to 12°C, and the thermochromic pigment b has a relationship of changing color within the color change temperature range of said thermochromic composition a.

By specifying the ΔH_{b} value of the thermochromic composition b within said range, the thermochromic composition b sensitively responds to temperature changes, quickly returns to the original color when application of the heat or cold required for the change is removed, and said color change is reversibly exhibited within the ΔHₐ region, such that various color changes are visually perceived by color mixing with the color of the thermochromic composition a memorized and retained within said ΔHₐ region.

More specifically, when T₄ of the thermochromic composition a that changes color while exhibiting a large hysteresis width (ΔHₐ) satisfies 28°C to 70°C and T₁ satisfies -20°C to 23°C, an appearance change accompanying color change in a living environment temperature range can be suitably visually recognized in a normal temperature range, and when t₁ of the thermochromic composition b that changes color while exhibiting a small hysteresis width (ΔH_{b}) is 25°C or more and ΔH_{b} satisfies 0.5 to 12°C, an appearance change accompanying color change can be suitably visually recognized by body temperature.

A thermosensitive multi-color-changing toy can be obtained by dispersing the pigment A containing said reversible thermochromic composition a and the pigment B containing the reversible thermochromic composition b in a vinyl chloride resin, which is a molding resin, and then performing molding.

Further, various light stabilizers may be added as necessary. Said light stabilizer is contained in order to prevent photodegradation of the reversible thermochromic composition containing the components (α), (β), and (γ), and is contained in a proportion of 0.3 to 24 wt%, and preferably 0.8 to 16 wt%. Among said light stabilizers, an ultraviolet absorber effectively blocks ultraviolet rays contained in sunlight or the like and prevents photodegradation caused by an excited state due to a photoreaction of the component (α). Antioxidants, singlet oxygen quenchers, superoxide anion quenchers, ozone quenchers, and the like suppress oxidation reactions. Said light stabilizer may be used alone or in combination with two or more kinds thereof. Said light stabilizer may be encapsulated in microcapsules together with the reversible thermochromic composition, or may be encapsulated in microcapsules and also added to the molding resin.

Said thermosensitive multi-color-changing toy is a toy formed of a vinyl chloride resin and having a hollow portion inside, and since vinyl chloride resin is inexpensive, it is widely used as a general-purpose resin. The vinyl chloride resin is also used for toys because it has excellent properties and can be easily provided with flexibility by adding a plasticizer.

Various additives such as conventional stabilizers, fillers, flame retardants, lubricants, impact resistance modifiers, and plasticizers may be added to the vinyl chloride resin as necessary according to the intended purpose.

Examples of the stabilizers include lead-based stabilizers such as tribasic lead sulfate, dibasic lead phosphite, basic lead sulfite, and lead silicate; metal soap-based stabilizers derived from metals such as potassium, magnesium, barium, zinc, cadmium, and lead and fatty acids such as 2-ethylhexanoic acid, lauric acid, myristic acid, palmitic acid, stearic acid, isostearic acid, hydroxystearic acid, oleic acid, ricinoleic acid, linoleic acid, and behenic acid; organotin-based stabilizers having an alkyl group, ester group, fatty acid group, maleic acid group, sulfur-containing group, or the like; composite metal soap-based stabilizers such as Ba-Zn-based, Ca-Zn-based, Ba-Ca-Sn-based, Ca-Mg-Sn-based, Ca-Zn-Sn-based, Pb-Sn-based, and Pb-Ba-Ca-based stabilizers; metal salt-based stabilizers generally derived from metal groups such as barium and zinc, and two or more types of organic acids, such as branched fatty acids including 2-ethylhexanoic acid, isodecanoic acid, and trialkylacetic acid, unsaturated fatty acids including oleic acid, ricinoleic acid, and linoleic acid, alicyclic acids including naphthenic acid, and aromatic acids including phenol, benzoic acid, salicylic acid, and substituted derivatives thereof; and metal salt liquid stabilizers obtained by dissolving these stabilizers in an organic solvent such as a petroleum hydrocarbon, alcohol, or glycerin derivative and further blending stabilizing auxiliaries such as a phosphite ester, epoxy compound, color development inhibitor, transparency improver, light stabilizer, antioxidant, bleed-out inhibitor, and lubricant, and, in addition to such metal-based stabilizers, examples also include epoxy compounds such as epoxy resins and epoxidized fatty acid alkyl esters, and non-metal-based stabilizers such as organic phosphite esters, and these may be used alone or in combination with two or more kinds thereof.

The amount of the stabilizer added is not particularly limited, but is preferably 1 to 15 parts by mass, and more preferably 1 to 8 parts by mass, based on 100 parts by mass of the vinyl chloride resin. When the amount of the stabilizer added is 1 part by mass or more, thermal decomposition during processing can be suppressed, and when the amount of the stabilizer added is 15 parts by mass or less, deterioration in mechanical properties of the molded body (toy) can be prevented.

As the filler, in addition to inorganic materials such as talc, carbonates such as heavy calcium carbonate, precipitated calcium carbonate, and colloidal calcium carbonate, aluminum hydroxide, magnesium hydroxide, titanium oxide, clay, mica, wollastonite, zeolite, silica, zinc oxide, magnesium oxide, carbon black, graphite, glass beads, glass fibers, carbon fibers, and metal fibers, organic fibers such as polyamide may also be used, and these may be used alone or in combination with two or more kinds thereof.

The amount of the filler added is not particularly limited, but is preferably 1 to 150 parts by mass, and more preferably 10 to 100 parts by mass, based on 100 parts by mass of the vinyl chloride resin. When the amount of the filler added is 1 part by mass or more, suitable rigidity can be imparted to the molded body (toy), and when the amount of the filler added is 150 parts by mass or less, a decrease in flexibility of the molded body (toy) can be prevented.

As the flame retardant, for example, metal hydroxides, bromine-based compounds, triazine ring-containing compounds, zinc compounds, phosphorus-based compounds, halogen-based flame retardants, silicon-based flame retardants, intumescent flame retardants, antimony oxide, and the like may be used. These may be used alone or in combination with two or more kinds thereof.

The amount of the flame retardant added is not particularly limited, but is preferably 1 to 150 parts by mass, and more preferably 10 to 100 parts by mass, based on 100 parts by mass of the vinyl chloride resin. When the amount of the flame retardant added is 1 part by mass or more, flame retardancy of the molded body (toy) can be improved, and when the amount of the flame retardant added is 150 parts by mass or less, a decrease in flexibility of the molded body (toy) can be prevented.

Examples of the lubricant include pure hydrocarbon-based lubricants such as liquid paraffin, natural paraffin, microwax, synthetic paraffin, and low-molecular-weight polyethylene; halogenated hydrocarbon-based lubricants; fatty acid-based lubricants such as higher fatty acids and oxy fatty acids; fatty acid amide-based lubricants such as fatty acid amides and bis-fatty acid amides; ester-based lubricants such as lower alcohol esters of fatty acids, polyhydric alcohol esters of fatty acids such as glycerides, polyglycol esters of fatty acids, and fatty alcohol esters of fatty acids (ester waxes); metal soaps; fatty alcohols; polyhydric alcohols; polyglycols; polyglycerols; partial esters of fatty acids and polyhydric alcohols; and partial esters of fatty acids and polyglycols or polyglycerols, and these may be used alone or in combination with two or more kinds thereof.

The amount of the lubricant added is not particularly limited, but is preferably 0.1 to 15 parts by mass, and more preferably 0.1 to 5 parts by mass, based on 100 parts by mass of the vinyl chloride resin. When the amount of the lubricant added is 0.1 parts by mass or more, adhesion of the resin composition to a molding machine can be reduced, and when the amount of the lubricant added is 15 parts by mass or less, a decrease in processability can be prevented.

When an impact resistance modifier is blended, examples thereof include chlorinated polyethylene, polybutadiene, polyisoprene, polychloroprene, fluororubber, styrene-butadiene copolymer rubber, acrylonitrile-styrene-butadiene copolymer rubber, methyl methacrylate-styrene-butadiene copolymer rubber, acrylic core-shell rubbers such as acrylate-methacrylate copolymers, silicone-based core-shell rubbers such as silicone-acrylate-methacrylate copolymers and silicone-acrylate-acrylonitrile-styrene copolymers, styrene-butadiene-styrene block copolymer rubber, styrene-isoprene-styrene block copolymer rubber, styrene-ethylene-butylene-styrene block copolymer rubber, ethylene-propylene copolymer rubber, and ethylene-propylene-diene copolymer rubber (EPDM). As the diene of EPDM, 1,4-hexadiene, dicyclopentadiene, methylenenorbornene, ethylidenenorbornene, propenylnorbornene, and the like may be used. These impact resistance modifiers may be used alone or in combination with two or more kinds thereof.

The amount of the impact resistance modifier added is not particularly limited, but is preferably 1 to 20 parts by mass, and more preferably 1 to 15 parts by mass, based on 100 parts by mass of the vinyl chloride resin. When the amount of the impact resistance modifier added is 1 part by mass or more, impact strength of the molded body (toy) can be improved, and when the amount of the impact resistance modifier added is 20 parts by mass or less, deterioration in the appearance of the molded body (toy) can be prevented.

Examples of said plasticizer include plasticizers for vinyl chloride-based resins, which can be appropriately used, such as phthalate ester-based plasticizers including di-2-ethylhexyl phthalate (DOP), di-n-octyl phthalate, dibutyl phthalate, diisononyl phthalate (DINP), and butyl benzyl phthalate; phosphate ester-based plasticizers including tricresyl phosphate and tri-2-ethylhexyl phosphate; adipate ester-based plasticizers including di-2-ethylhexyl adipate and diisononyl adipate; sebacate ester-based plasticizers including di-2-ethylhexyl sebacate; azelate ester-based plasticizers including di-2-ethylhexyl azelate; trimellitate ester-based plasticizers including tri-2-ethylhexyl trimellitate; polyester-based plasticizers; benzoate ester-based plasticizers including di-2-ethylhexyl benzoate, diethylene glycol dibenzoate, and 2,2,4-trimethyl-1,3-pentanediol isobutyrate benzoate; citrate ester-based plasticizers including acetyl tributyl citrate and acetyl tri-2-ethylhexyl citrate; glycolate ester-based plasticizers; chlorinated paraffin-based plasticizers; chlorinated fatty acid ester-based plasticizers; epoxy-based plasticizers; and texanol isobutyrate, and diisononyl adipate, acetyl tributyl citrate, and acetyl tri-2-ethylhexyl citrate, which have high safety, are preferably used.

In addition, release agents, flowability improvers, antistatic agents, surfactants, antifogging agents, antibacterial agents, foaming agents, and the like may also be optionally blended as required, as long as the effects of the present invention are not impaired.

The thermosensitive multi-color-changing toy of the present invention is a toy formed of a vinyl chloride resin and having a hollow portion inside, and compared with a solid toy in which the resin is filled up to the central portion (inside), the color change with respect to temperature change is sharper and clearer, and visibility of multicolor changes in a resin containing a plurality of reversible thermochromic compositions used in the present invention is excellent.

The hollow portion may be configured to communicate with the outside or may be configured not to communicate with the outside. In addition, the thermosensitive multi-color-changing toy of the present invention may have a hollow structure defined by a vinyl chloride resin containing a plurality of reversible thermochromic compositions and other materials. Specifically, the hollow structure may be defined by a combination of a material such as a non-color-changing resin, metal, or wood, and a vinyl chloride resin containing a plurality of reversible thermochromic compositions. In the present invention, even when the hollow portion is not completely isolated from the outside and has an opening, it may be regarded as having a hollow structure. This is because, when the opening is small, air flow between the hollow portion and the outside is restricted, and for example, the toy can be floated on water.

When the hollow portion of said toy does not communicate with the outside, and a volume ratio of the vinyl chloride resin to the hollow portion is 85:15 to 10:90, preferably 75:25 to 15:85, and more preferably 65:35 to 20:80, color change is sharp and clear, visibility of multicolor changes is excellent, and the toy can be used as a floating toy that floats in water. The toy according to the present invention is suitable for use in play using warm water or cold water in a bathtub or the like because it exhibits unexpected color changes due to temperature changes, and since it does not sink in a bathtub or the like, it allows safer play. In order to allow said toy to float on water, it is sufficient that an apparent specific gravity of the toy is less than 1.

By forming irregularities on the surface of said thermosensitive multi-color-changing toy, a variety of toys that exhibit complex color changes can be obtained.

Examples of the form of said toy include dolls, animal toys, vehicle toys, buildings and background toys, cooking toys, accessories, costume-related small toys, and other small toys.

In addition, a toy set can be obtained by combining the thermosensitive multi-color-changing toy of the present invention with a temperature-changing member that changes a temperature of a part or all of said toy. The color-changing member is not particularly limited as long as it can change the temperature of a part or all of said toy, that is, can heat or cool. For example, the temperature-changing member can be a member formed of a flexible resin, containing a liquid therein, and capable of ejecting the liquid therein when pressure is applied from the outside, and can be, for example, a dropper-shaped member. Such a member can be used as either a heating member or a cooling member by using cold water or warm water as the liquid contained therein. When said toy is used in a bathtub or the like, the temperature-changing member can be easily switched between a cooling member and a heating member. Further, a bucket-shaped container filled with a liquid so that said entire toy can be immersed, a brush capable of applying cold water or warm water to said member, or a container having openings at both ends and capable of ejecting water from an upper opening by pressing a lower opening against a water surface may also be used as the temperature-changing member.

As the temperature-changing member, a cooling spray, an electric heater, and the like may also be used.

### Examples

Examples are shown below, but the present invention is not limited to these Examples.

In the Examples, parts mean parts by mass.

The color change temperatures were measured by setting a measurement sample in a measurement portion of a colorimeter (TC-3600 colorimeter, manufactured by Tokyo Denshoku Co., Ltd.), increasing and decreasing the temperature of the sample portion at a rate of 2°C/min, measuring a lightness value as the color density at each temperature, and preparing a color density-temperature curve. Each temperature, hysteresis width, and color development density were determined from said color density-temperature curve.

### Example 1

### Production of thermosensitive multi-color-changing toy

A thermochromic PVC plastisol was prepared by dispersing, in a PVC plastisol, 17.0 parts of a thermochromic pigment A (ΔHₐ: 18°C, T₁: 10°C, T₂: 16°C, T₃: 27°C, T₄: 35°C, reversible color change of pink ←→ colorless) in which a reversible thermochromic composition containing 1.5 parts of 9-ethyl-(3-methylbutyl)amino-spiro[12H-benzo[a]xanthene-12,1'(3H)-isobenzofuran]-3'-one as a component (α), 5 parts of 2,2-bis(4'-hydroxyphenyl)hexafluoropropane as a component (β), and 50 parts of neopentyl stearate as a component (γ) was encapsulated in microcapsules by an interfacial polymerization method; 14.0 parts of a thermochromic pigment B (ΔH_{b}: 3.5°C, t₁: 18°C, t₂: 24°C, t₃: 21°C, t₄: 28°C, reversible color change of blue-green ←→ colorless) in which a reversible thermochromic composition containing 1.2 parts of 3,3-bis(2-ethoxy-4-diethylaminophenyl)-4-azaphthalide as a component (α), 6 parts of 4,4'-(2-ethylhexylidene)bisphenol as a component (β), and 30 parts of cetyl decanoate and 20 parts of stearyl decanoate as a component (γ) was encapsulated in microcapsules by an interfacial polymerization method; and 5.0 parts of a non-thermochromic colorant C [yellow fluorescent pigment (trade name: EPOCOLOR FP-117, manufactured by NIPPON SHOKUBAI CO., LTD.)].

The color development density of the thermochromic pigment A at the complete color development temperature of said thermochromic pigment B was 0%, and the color development density of the thermochromic pigment A at the complete decoloration temperature of the thermochromic pigment B was 80%.

Using said thermochromic PVC plastisol, slush molding was performed with a mold of a dinosaur-shaped object having irregularities on a surface to obtain an animal toy formed to be hollow.

A volume ratio of the vinyl chloride resin to the hollow portion of said toy was 20:80.

Said toy exhibited a dark green color at 10°C or lower, and when the toy was sequentially immersed in water at 27°C to 28°C, water at 35°C or higher, water at 16°C to 18°C, and water at 10°C or lower, the toy could sharply and clearly change color to red, yellow, green, and dark green, respectively.

Next, when water at 35°C was applied with a brush to the surface of said toy in a state exhibiting a dark green color, said toy started to change color from the convex portions to red and then to yellow, and said toy became yellow. When water at 16°C to 18°C was applied to the surface of said yellow toy, the toy started to change color from the convex portions to green, and said toy became green. Further, when water at 10°C or lower was applied to said toy, the toy became dark green.

Since said toy exhibited the above-described color-changing behavior in response to temperature changes, four color changes of dark green, red, yellow, and green could be repeatedly reproduced and visually perceived by familiar thermal means such as environmental temperature changes, ice water, tap water, and body temperature, and interestingness and unexpectedness of color change could be imparted.

### Example 2

### Production of thermosensitive multi-color-changing toy

A thermochromic PVC plastisol was prepared by dispersing, in a PVC plastisol, 15.0 parts of a thermochromic pigment A (ΔHₐ: 16°C, T₁: 14°C, T₂: 16°C, T₃: 28°C, T₄: 34°C, reversible color change of cyan ←→ colorless) in which a reversible thermochromic composition containing 0.8 parts of 3,3-bis(2-ethoxy-4-diethylaminophenyl)-4-azaphthalide as a component (α), 5 parts of 4,4'-(2-ethylhexylidene)bisphenol and 1 part of 4,4'-(1-phenylethylidene)bisphenol as a component (β), and 50 parts of neopentyl stearate as a component (γ) was encapsulated in microcapsules by an interfacial polymerization method; and 20.0 parts of a thermochromic pigment B (ΔH_{b}: 2°C, t₁: 21°C, t₂: 25°C, t₃: 22°C, t₄: 28°C, reversible color change of magenta ←→ colorless) in which a reversible thermochromic composition containing 1.5 parts of 9-ethyl-(3-methylbutyl)amino-spiro[12H-benzo[a]xanthene-12,1'(3H)-isobenzofuran]-3'-one as a component (α), 6 parts of 4,4'-(2-ethylhexylidene)bisphenol as a component (β), and 30 parts of cetyl decanoate and 20 parts of stearyl decanoate as a component (γ) was encapsulated in microcapsules by an interfacial polymerization method.

The color development density of the thermochromic pigment A at the complete color development temperature of said thermochromic pigment B was 0%, and the color development density of the thermochromic pigment A at the complete decoloration temperature of the thermochromic pigment B was 95%.

Using said thermochromic PVC plastisol, a vehicle toy was obtained with a mold of an automobile-shaped object having irregularities on a surface.

A volume ratio of the vinyl chloride resin to the hollow portion of said toy was 75:25.

Said toy exhibited a purple color at 14°C or lower, and when the toy was sequentially immersed in water at 27°C to 28°C, water at 34°C or higher, water at 16°C to 18°C, and water at 14°C or lower, the toy could sharply and clearly change color to cyan, white, magenta, and purple, respectively.

Next, when water at 35°C was applied to the surface of said toy in a state exhibiting a purple color, the toy started to change color from the convex portions to cyan and then to white, and said toy became white. When water at 16°C to 18°C was applied to the surface of said white toy, the toy started to change color from the convex portions to magenta, and said toy became magenta. Further, when water at 10°C or lower was applied to said toy, the toy became purple.

Since said toy exhibited the above-described color-changing behavior in response to temperature changes, four color changes of purple, cyan, white, and magenta could be repeatedly reproduced and visually perceived by familiar thermal means such as environmental temperature changes, ice water, tap water, and body temperature, and interestingness and unexpectedness of color change could be imparted.

### Example 3

### Production of thermosensitive multi-color-changing toy

A thermochromic PVC plastisol was prepared by dispersing, in a PVC plastisol, 17.0 parts of a thermochromic pigment A (ΔHₐ: 16°C, T₁: 14°C, T₂: 16°C, T₃: 28°C, T₄: 34°C, reversible color change of cyan ←→ colorless) in which a reversible thermochromic composition containing 0.8 parts of 3,3-bis(2-ethoxy-4-diethylaminophenyl)-4-azaphthalide as a component (α), 5 parts of 4,4'-(2-ethylhexylidene)bisphenol and 1 part of 4,4'-(1-phenylethylidene)diphenol as a component (β), and 50 parts of neopentyl stearate as a component (γ) was encapsulated in microcapsules by an interfacial polymerization method; 16.0 parts of a thermochromic pigment B (ΔH_{b}: 1.5°C, t₁: 21°C, t₂: 25°C, t₃: 21°C, t₄: 28°C, reversible color change of yellow ←→ colorless) in which a reversible thermochromic composition containing 1.5 parts of 4-[2,6-bis(2-ethoxyphenyl)-4-pyridinyl]-N,N-dimethylbenzenamine as a component (α), 4.8 parts of 4'-tert-butyl-2,4-dihydroxybenzophenone and 1.2 parts of 4,4'-(1-phenylethylidene)bisphenol as a component (β), and 30 parts of cetyl decanoate and 20 parts of stearyl decanoate as a component (γ) was encapsulated in microcapsules by an interfacial polymerization method; and 1.8 parts of a non-thermochromic colorant C [pink fluorescent pigment (trade name: EPOCOLOR FP-1000N, manufactured by NIPPON SHOKUBAI CO., LTD.)].

The color development density of the thermochromic pigment A at the complete color development temperature of said thermochromic pigment B was 0%, and the color development density of the thermochromic pigment A at the complete decoloration temperature of the thermochromic pigment B was 95%.

Using said thermochromic PVC plastisol, rotational molding was performed with a mold of a beetle-shaped object having irregularities on a surface to obtain an insect toy.

A volume ratio of the vinyl chloride resin to the hollow portion of said toy was 65:35.

Said toy exhibited a green color at 14°C or lower. When the toy was sequentially immersed in water at 27°C to 28°C, water at 34°C or higher, water at 16°C to 18°C, and water at 14°C or lower, the toy could sharply and clearly change color to blue, pink, orange, and green, respectively.

Next, when water at 35°C was applied with a brush to the surface of said toy in a state exhibiting a green color, the toy started to change color from the convex portions to blue and then to pink, and said toy became pink. When water at 16°C to 18°C was applied to the surface of said pink toy, the toy started to change color from the convex portions to orange and became orange. Further, when water at 10°C or lower was applied to said toy, the toy became green.

Since said toy exhibited the above-described color-changing behavior in response to temperature changes, four color changes of green, blue, pink, and orange could be repeatedly reproduced and visually perceived by familiar thermal means such as environmental temperature changes, ice water, tap water, and body temperature, and interestingness and unexpectedness of color change could be imparted.

### Example 4

### Production of thermosensitive multi-color-changing toy

A thermochromic PVC plastisol was prepared by dispersing, in a PVC plastisol, 17.0 parts of a thermochromic pigment A (ΔHₐ: 16.5°C, T₁: 13°C, T₂: 16°C, T₃: 27°C, T₄: 35°C, reversible color change of pink ←→ colorless) in which a reversible thermochromic composition containing 1.5 parts of 9-ethyl-(3-methylbutyl)amino-spiro[12H-benzo[a]xanthene-12,1'(3H)-isobenzofuran]-3'-one as a component (α), 3 parts of 4,4'-(2-methylpropylidenebisphenol, 2 parts of 4,4'-(1-phenylethylidene)bisphenol, and 2 parts of 4,4'-(2-ethylhexylidene)bisphenol as a component (β), and 50 parts of neopentyl stearate as a component (γ) was encapsulated in microcapsules by an interfacial polymerization method; 14.0 parts of a thermochromic pigment B (ΔH_{b}: 3.5°C, t₁: 18°C, t₂: 24°C, t₃: 21°C, t₄: 28°C, reversible color change of blue-green ←→ colorless) in which a reversible thermochromic composition containing 1.2 parts of 3,3-bis(2-ethoxy-4-diethylaminophenyl)-4-azaphthalide as a component (α), 6 parts of 4,4'-(2-ethylhexylidene)bisphenol as a component (β), and 30 parts of cetyl decanoate and 20 parts of stearyl decanoate as a component (γ) was encapsulated in microcapsules by an interfacial polymerization method; 5.0 parts of a non-thermochromic colorant C [yellow fluorescent pigment (trade name: EPOCOLOR FP-117, manufactured by NIPPON SHOKUBAI CO., LTD.)]; and 0.7 parts of acetyl tributyl citrate as a plasticizer.

The color development density of the thermochromic pigment A at the complete color development temperature of said thermochromic pigment B was 0%, and the color development density of the thermochromic pigment A at the complete decoloration temperature of the thermochromic pigment B was 80%.

Using said thermochromic PVC plastisol, slush molding was performed with a mold of a miniature car tire-shaped object to form a hollow molded product, and the molded product was assembled to a tire portion of a miniature car to obtain an automobile toy.

A volume ratio of the vinyl chloride resin to the hollow portion of said tire was 20:80.

Said toy exhibited a dark green color at 13°C or lower, and when the toy was sequentially immersed in water at 27°C to 28°C, water at 35°C or higher, water at 16°C to 18°C, and water at 13°C or lower, the toy could sharply and clearly change color to red, yellow, green, and dark green, respectively.

Next, when water at 35°C filled in a container-shaped temperature-changing member was applied to the surface of said toy in a state exhibiting a dark green color, the toy started to change color to red and then to yellow, and said toy became yellow. When water at 16°C to 18°C was applied to the surface of said yellow toy, the toy started to change color to green, and said toy became green. Further, when water at 13°C or lower was applied to said toy, the toy became dark green.

Since said toy exhibited the above-described color-changing behavior in response to temperature changes, four color changes of dark green, red, yellow, and green could be repeatedly reproduced and visually perceived by familiar thermal means such as environmental temperature changes, ice water, tap water, and body temperature, and interestingness and unexpectedness of color change could be imparted.

### Example 5

### Production of thermosensitive multi-color-changing toy

A thermochromic PVC plastisol was prepared by dispersing, in a PVC plastisol, 15.0 parts of a thermochromic pigment A (ΔHₐ: 16°C, T₁: 14°C, T₂: 16°C, T₃: 28°C, T₄: 34°C, reversible color change of cyan ←→ colorless) in which a reversible thermochromic composition containing 0.8 parts of 3,3-bis(2-ethoxy-4-diethylaminophenyl)-4-azaphthalide as a component (α), 3 parts of 4,4'-(2-methylpropylidene)bisphenol, 2 parts of 4,4'-(2-ethylhexylidene)bisphenol, and 1 part of 4,4'-(1-phenylethylidene)bisphenol as a component (β), and 50 parts of neopentyl stearate as a component (γ) was encapsulated in microcapsules by an interfacial polymerization method; 20.0 parts of a thermochromic pigment B (ΔH_{b}: 2°C, t₁: 21°C, t₂: 25°C, t₃: 22°C, t₄: 28°C, reversible color change of magenta ←→ colorless) in which a reversible thermochromic composition containing 1.5 parts of 9-ethyl-(3-methylbutyl)amino-spiro[12H-benzo[a]xanthene-12,1'(3H)-isobenzofuran]-3'-one as a component (α), 6 parts of 4,4'-(2-ethylhexylidene)bisphenol as a component (β), and 30 of cetyl decanoate and 20 parts of stearyl decanoate as a component (γ) was encapsulated in microcapsules by an interfacial polymerization method; and 0.7 parts of acetyl tributyl citrate as a plasticizer.

The color development density of the thermochromic pigment A at the complete color development temperature of said thermochromic pigment B was 0%, and the color development density of the thermochromic pigment A at the complete decoloration temperature of the thermochromic pigment B was 95%.

Using said thermochromic PVC plastisol, slush molding was performed with a mold of a dinosaur-shaped object having irregularities on a surface to obtain an animal toy formed to be hollow.

A volume ratio of the vinyl chloride resin to the hollow portion of said toy was 20:80.

Said toy exhibited a purple color at 14°C or lower, and when the toy was sequentially immersed in water at 28°C, water at 34°C or higher, water at 16°C to 21°C, and water at 14°C or lower, the toy could sharply and clearly change color to cyan, white, magenta, and purple, respectively.

Next, when water at 34°C was applied to the surface of said toy in a state exhibiting a purple color, the toy started to change color from the convex portions to cyan and then to white, and said toy became white. When water at 16°C to 21°C was applied to the surface of said white toy, the toy started to change color from the convex portions to magenta, and said toy became magenta. Further, when water at 10°C or lower was applied to said toy, the toy became purple.

Since said toy exhibited the above-described color-changing behavior in response to temperature changes, four color changes of purple, cyan, white, and magenta could be repeatedly reproduced and visually perceived by familiar thermal means such as environmental temperature changes, ice water, tap water, and body temperature, and interestingness and unexpectedness of color change could be imparted.

### Example 6

### Production of toy set

A toy set was obtained, the toy set including the thermosensitive multi-color-changing toy obtained in Example 5; as temperature-changing members, a bucket-shaped container in which the entire toy can be immersed in cold water or warm water, a brush for applying cold water or warm water to the toy, and a container having openings at both ends and ejecting water from an upper opening by pressing a lower opening against a water surface; and a floating member capable of floating the thermosensitive multi-color-changing toy on a water surface.

With said toy set, by changing color indoors by immersing the thermosensitive multi-color-changing toy in a bucket-shaped container filled with cold water or warm water, or by bringing a brush having cold water or warm water applied thereto into contact with the surface of the toy, the four color changes of purple, cyan, white, and magenta could be repeatedly reproduced and visually perceived, and interestingness and unexpectedness of color change could be imparted.

In addition, in a bathtub, after the thermosensitive multi-color-changing toy that had been changed to purple in advance with cold water was placed on the floating member and floated in the bathtub, the container having openings at both ends was pressed against the water surface to eject water from the upper opening by pressing the lower opening against the water surface, and the ejected water was brought into contact with the surface of the toy to change color, such that four color changes of purple, cyan, white, and magenta could be repeatedly reproduced and visually perceived, and interestingness and unexpectedness of color change could be imparted.

### Comparative Example 1

### Production of thermosensitive multi-color-changing toy

A thermochromic PVC plastisol was prepared by dispersing, in a PVC plastisol, 17.0 parts of a thermochromic pigment A (ΔHₐ: 16.5°C, T₁: 13°C, T₂: 16°C, T₃: 27°C, T₄: 35°C, reversible color change of pink ←→ colorless) in which a reversible thermochromic composition containing 1.5 parts of 9-ethyl-(3-methylbutyl)amino-spiro[12H-benzo[a]xanthene-12,1'(3H)-isobenzofuran]-3'-one as a component (α), 3 parts of 4,4'-(2-methylpropylidenebisphenol, 2 parts of 4,4'-(1-phenylethylidene)bisphenol, and 2 parts of 4,4'-(2-ethylhexylidene)bisphenol as a component (β), and 50 parts of neopentyl stearate as a component (γ) was encapsulated in microcapsules by an interfacial polymerization method; 14.0 parts of a thermochromic pigment B (ΔH_{b}: 4.5°C, t₁: 24°C, t₂: 26°C, t₃: 28°C, t₄: 31°C, reversible color change of blue-green ←→ colorless) in which a reversible thermochromic composition containing 1.2 parts of 3,3-bis(2-ethoxy-4-diethylaminophenyl)-4-azaphthalide as a component (α), 6 parts of 4,4'-(2-ethylhexylidene)bisphenol as a component (β), and 20 parts of cetyl decanoate and 30 parts of stearyl decanoate as a component (γ) was encapsulated in microcapsules by an interfacial polymerization method; and 5.0 parts of a non-thermochromic colorant C [yellow fluorescent pigment (trade name: EPOCOLOR FP-117, manufactured by NIPPON SHOKUBAI CO., LTD.)].

The color development density of the thermochromic pigment A at the complete color development temperature of said thermochromic pigment B was 0%, and the color development density of the thermochromic pigment A at the complete decoloration temperature of the thermochromic pigment B was 40%.

Using said thermochromic PVC plastisol, slush molding was performed with a mold of a dinosaur-shaped object having irregularities on a surface to obtain an animal toy formed to be hollow.

A volume ratio of the vinyl chloride resin to the hollow portion of said toy was 20:80.

Said toy exhibited a dark green color at 13°C or lower, and when the toy was sequentially immersed in water at 27°C to 31°C, water at 35°C or higher, water at 16°C to 24°C, and water at 13°C or lower, the toy could be changed in color to red, yellow, green, and dark green, respectively; however, when the toy changed color from dark green to red, a clear red color was not visually recognized because the color development density of the thermochromic pigment A was low.

### Comparative Example 2

### Production of thermosensitive multi-color-changing toy

A thermochromic PVC plastisol was prepared by dispersing, in a PVC plastisol, 15.0 parts of a thermochromic pigment A (ΔHₐ: 16.5°C, T₁: 13°C, T₂: 16°C, T₃: 28°C, T₄: 34°C, reversible color change of cyan ←→ colorless) in which a reversible thermochromic composition containing 0.8 parts of 3,3-bis(2-ethoxy-4-diethylaminophenyl)-4-azaphthalide as a component (α), 3 parts of 4,4'-(2-methylpropylidene)bisphenol, 2 parts of 4,4'-(2-ethylhexylidene)bisphenol, and 1 part of 4,4'-(1-phenylethylidene)bisphenol as a component (β), and 50 parts of neopentyl stearate as a component (γ) was encapsulated in microcapsules by an interfacial polymerization method; and 20.0 parts of a thermochromic pigment B (ΔH_{b}: 4.5°C, t₁: 14°C, t₂: 19°C, t₃: 18°C, t₄: 24°C, reversible color change of magenta ←→ colorless) in which a reversible thermochromic composition containing 1.5 parts of 9-ethyl-(3-methylbutyl)amino-spiro[12H-benzo[a]xanthene-12,1'(3H)-isobenzofuran]-3'-one as a component (α), 6 parts of 4,4'-(2-ethylhexylidene)bisphenol as a component (β), and 25 parts of n-nonyl palmitate and 25 parts of decyl myristate as a component (γ) was encapsulated in microcapsules by an interfacial polymerization method.

The color development density of the thermochromic pigment A at the complete color development temperature of said thermochromic pigment B was 75%, and the color development density of the thermochromic pigment A at the complete decoloration temperature of the thermochromic pigment B was 0%.

Using said thermochromic PVC plastisol, a vehicle toy was obtained with a mold of an automobile-shaped object having irregularities on a surface.

A volume ratio of the vinyl chloride resin to the hollow portion of said toy was 75:25.

Said toy exhibited a purple color at 13°C or lower, and when the toy was sequentially immersed in water at 18°C to 24°C, water at 34°C or higher, water at 14°C to 16°C, and water at 13°C or lower, the toy could be changed in color to cyan, white, magenta, and purple, respectively; however, when the toy changed color from white to magenta, a clear magenta color was not visually recognized because the color development density of the thermochromic pigment A was high.

### REFERENCE SIGNS LIST

T₁ Complete decoloration temperature of reversible thermochromic composition a
T₂ Decoloration starting temperature of reversible thermochromic composition a
T₃ Color development starting temperature of reversible thermochromic composition a
T₄ Complete color development temperature of reversible thermochromic composition a
t₁ Complete color development temperature of reversible thermochromic composition b
t₂ Color development starting temperature of reversible thermochromic composition b
t₃ Decoloration starting temperature of reversible thermochromic composition b
t₄ Complete decoloration temperature of reversible thermochromic composition b

## Claims

1. A thermosensitive multi-color-changing toy comprising a vinyl chloride resin in which a pigment A containing a reversible thermochromic composition a and a pigment B containing a reversible thermochromic composition b are dispersed, wherein the toy has a hollow portion inside, each of said reversible thermochromic compositions a and b is a heating-decoloring composition that exhibits a hysteresis curve in a color density-temperature curve, in which, in a temperature-decreasing process from a decolored state, the compositions start to develop color when a color development starting temperature (T₂ or t₂) is reached and become completely colored when a complete color development temperature (T₁ or t₁) is reached, and in a temperature-increasing process from the colored state, the compositions start to decolor when a decoloration starting temperature (T₃ or t₃) is reached and become completely decolored when a complete decoloration temperature (T₄ or t₄) is reached, and a color development density of one reversible thermochromic composition is 40% or less at the complete color development temperature of the other reversible thermochromic composition, or a color development density of one reversible thermochromic composition is 60% or more at the complete decoloration temperature of the other reversible thermochromic composition.

2. The thermosensitive multi-color-changing toy according to claim 1, wherein the toy has irregularities on a surface.

3. The thermosensitive multi-color-changing toy according to claim 1 or 2, wherein the hysteresis curves of the reversible thermochromic compositions a and b do not overlap each other.

4. The thermosensitive multi-color-changing toy according to claim 1 or 2, wherein the hysteresis curve of the reversible thermochromic composition b is included within the hysteresis curve of the reversible thermochromic composition a.

5. The thermosensitive multi-color-changing toy according to claim 4, wherein a hysteresis width (ΔHₐ) of the reversible thermochromic composition a and a hysteresis width (ΔH_{b}) of the reversible thermochromic composition b satisfy the following conditions (1) and (2): ${ΔH}_{a} = \left[\left({T}_{4}+{T}_{3}\right)/2-\left({T}_{2}+{T}_{1}\right)/2\right] = 10 to 50 ° C$ (1) ${ΔH}_{b} = \left[\left({t}_{4}+{t}_{3}\right)/2-\left({t}_{2}+{t}_{1}\right)/2\right] = 0.5 to 20 ° C$ (2) wherein T₁, T₂, T₃, and T₄ represent the complete color development temperature, color development starting temperature, decoloration starting temperature, and complete decoloration temperature of the reversible thermochromic composition a, respectively, and t₁, t₂, t₃, and t₄ represent the complete color development temperature, color development starting temperature, decoloration starting temperature, and complete decoloration temperature of the reversible thermochromic composition b, respectively.

6. The thermosensitive multi-color-changing toy according to claim 1 or 2, wherein the hollow portion of said toy does not communicate with the outside, and a ratio of a volume of the vinyl chloride resin to a volume of the hollow portion is 85:15 to 10:90.

7. A toy set comprising the thermosensitive multi-color-changing toy according to claim 1 or 2, and a temperature-changing member that changes a temperature of a part or all of said thermosensitive multi-color toy.

8. The toy set according to claim 7, wherein said temperature-changing member applies cold water or warm water to said thermosensitive multi-color-changing toy.
